# EUROPÄISCHE PATENTSCHRIFT

(11) **EP 3 581 468 B1**
(45) Veröffentlichungstag und Bekanntmachung des Hinweises auf die Patenterteilung: **09.12.2020**
(21) Anmeldenummer: 18176990.2
(22) Anmeldetag: 11.06.2018
(51) Int. Cl.: B62D 21/20, B60R 19/54, B62D 21/12, B62D 21/18, B62D 21/14

(54) **CHASSISSTRUKTUR, CASSISSTRUKTURSYSTEM UND CHASSIS EINES NUTZFAHRZEUGS**
CHASSIS STRUCTURE, CHASSIS STRUCTURE SYSTEM AND CHASSIS OF A COMMERCIAL VEHICLE
STRUCTURE DE CHÂSSIS, SYSTÈME DE STRUCTURE DE CHÂSSIS ET CHÂSSIS D'UN VÉHICULE UTILITAIRE

(43) Veröffentlichungstag der Anmeldung: 18.12.2019
(73) Patentinhaber: Schmitz Cargobull AG, 48341 Altenberge (DE)
(72) Erfinder: Matzner, Daniel, 49086 Osnabrück (DE); Dorr, Christoph, 46514 Schermbeck (DE)
(74) Vertreter: Cohausz & Florack

(56) Entgegenhaltungen:
- EP-A1- 0 921 975
- EP-A2- 1 832 498
- GB-A- 2 044 193
- US-A- 2 801 863

## Beschreibung

Die Erfindung betrifft eine Chassisstruktur eines Nutzfahrzeugs, insbesondere Sattelaufliegers, Anhängers oder Lastkraftwagens, mit einem Ladeboden zum Abstellen von zu transportierender Ladung, mit zwei Längsträgern zum Abstützen des Ladebodens und mit einem dem hinteren Ende der Längsträger zugeordneten Kopfrahmen, wobei der Kopfrahmen ein sich wenigstens abschnittsweise hinter sowie quer zu den Längsträgern erstreckendes Mittelteil und zwei jeweils wenigstens abschnittsweise auf den Außerseiten der gegenüberliegenden Längsträgern angeordnete sowie jeweils mit einem Endabschnitt des Mittelteils verbundene Seitenteile aufweist. Ferner betrifft die Erfindung ein Chassisstruktursystem mit wenigstens einer Chassisstruktur der genannten Art sowie ein Chassis eines Nutzfahrzeugs, insbesondere Sattelaufliegers, Anhängers oder Lastkraftwagens, mit einer Chassisstruktur der genannten Art.

Nutzfahrzeuge, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen. So sind beispielsweise Kofferaufbauten mit festen Seitenwänden und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet.

Neben Kofferaufbauten sind zudem sogenannte Planenaufbauten bekannt, bei denen die Seitenwände und das Dach durch wenigstens eine Planeneinheit verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Planeneinheit entlang der Seitenwand verschoben werden kann, spricht man auch von sogenannten Curtainsidern. Das Dach von Planenaufbauten weist typischerweise seitlich angeordnete Holmstrukturen in Form von Längsholmen auf, die unter Bildung einer Rahmenstruktur quer zum Nutzfahrzeug über Spriegel miteinander verbunden sind. Die Rahmenstruktur trägt dann die das Dach verschließende Planeneinheit, wobei die Rahmenstruktur durch Rungen getragen wird, die sich wenigstens an den Ecken des Nutzfahrzeugs befinden.

Neben Planenaufbauten und Kofferaufbauten, können die Nutzfahrzeuge beispielsweise auch Ladebordwände aufweisen. Von den Ladebordwänden eines Nutzfahrzeugs können zum Entladen desselben bedarfsweise einzelne Ladebordwände nach unten geklappt werden. Diese Nutzfahrzeuge dienen meist dem Transport von losem Schüttgut, wie etwa Baustoffen oder dergleichen.

Eine gattungsbildende Chassisstruktur ist beispielsweise aus der EP 1 832 498 A2 bekannt.

Unabhängig von der Art des Aufbaus, weist dieser stets einen Ladeboden auf, auf dem die zu transportierte Ladung abgestellt, aufgeschüttet oder gestapelt werden kann. Des Weiteren weisen die Nutzfahrzeuge unabhängig vom jeweiligen Aufbau typischerweise ein Chassis auf, der eine Chassisstruktur etwa in Form einer Rahmenstruktur aufweisen kann. Das Chassis dient der Anbindung des Aufbaus an das Fahrgestell des Nutzfahrzeugs, wobei das Chassis den Ladeboden direkt oder indirekt trägt bzw. abstützt. Das Chassis dient daher ebenfalls der Ableitung der Gewichtskräfte der Ladung vom Ladeboden an das Fahrgestell und damit an den Untergrund, auf dem das Nutzfahrzeug steht. Typische Chassis weisen Längsträger auf, die sich über wenigstens etwa die gesamte Länge oder wenigstens einen Teil der Länge des Nutzfahrzeugs erstrecken. Die Längsträger, von denen regelmäßig zwei in einer parallelen und voneinander beabstandeten Anordnung vorgesehen sind, sind zudem üblicherweise über eine Reihe von ebenfalls parallel ausgerichteter und voneinander beabstandeter, sich quer zu den Längsträgern erstreckenden Querträgern miteinander verbunden. Man spricht in diesem Zusammenhang auch von einem sogenannten Leiterrahmen.

Am Heck, also am hinteren Ende des Nutzfahrzeugs, befindet sich zudem meist ein sogenannter Kopfrahmen, der einerseits den hinteren Abschluss des Chassis oder der Chassisstruktur bildet und zudem Kräfte aufnimmt und an die Längsträger ableitet, wenn das Nutzfahrzeug rückwärts gegen ein Hindernis, insbesondere in Form einer Laderampe, stößt. Zudem verläuft der Kopfrahmen typischerweise unterhalb des hinteren Randes des Ladebodens, so dass der Kopfrahmen auch dem Ableiten von Kräften dient, die auf das Nutzfahrzeug einwirken, wenn beim Beladen des Nutzfahrzeugs mit Staplern oder Hubwagen von hinten auf den Ladeboden aufgefahren wird.

Der Kopfrahmen erstreckt sich zudem typischerweise über die gesamte Breite des Nutzfahrzeugs und kann so auch Kräfte ableiten, wenn das Nutzfahrzeug mit einer hinteren Ecke statt flächig mit der Rückseite gegen ein Hindernis stößt. Damit dient der Kopfrahmen der Einfachheit halber auch der Montage sogenannter Rammpuffer. Rammpuffer können beispielsweise elastisch ausgebildet werden, um Beschädigungen des Kopfrahmens zu vermeiden. Auch können die Rammpuffer Rollen aufweisen, um beim Be- oder Entladen an einem Hindernis in vertikaler Richtung abgleiten zu können. Es können anstelle von Rollen auch Verschließteile vorgesehen sein, die ausgetauscht werden, wenn diese abgerieben, mithin verschlissen, sind.

Die bestehenden Kopfrahmen sind mithin sehr unterschiedlich ausgebildet und jeweils an das entsprechende Fahrzeug und dessen geplante Verwendung angepasst. Dies ermöglicht sehr funktionale Chassisstrukturen. Jedoch wird dies durch einen nicht unerheblichen konstruktions- und Herstellungsaufwand erkauft.

Daher liegt der vorliegenden Erfindung die Aufgabe zugrunde, die Chassisstruktur, das Chassisstruktursystem und das Chassis jeweils der eingangs genannten und zuvor näher beschriebenen Art derart auszugestalten und weiterzubilden, dass konstruktions- und Herstellungsaufwand gesenkt werden kann, ohne die Funktionalität desselben nennenswert zu beeinträchtigen.

Diese Aufgabe ist bei einem Chassis nach dem Oberbegriff des Anspruchs 1 dadurch gelöst, dass die Seitenteile jeweils lösbar mit einem Endabschnitt des Mittelteils verbunden, insbesondere verschraubt, sind.

Die genannte Aufgabe ist gemäß Anspruch 14 ferner durch ein Chassisstruktursystem mit wenigstens einer Chassisstruktur nach einem der Ansprüche 1 bis 13, mit wenigstens zwei unterschiedlichen Arten von Mittelteilen und/oder mit wenigstens zwei unterschiedlichen Arten von Seitenteilen und/oder mit jeweils zwei unterschiedlichen Arten von Längsträgern gelöst, wobei das Mittelteil, die Seitenteile und/oder die Längsträger der Chassisstruktur zur Bildung unterschiedlicher Arten von Chassisstrukturen jeweils gegen ein Mittelteil, Seitenteile und/oder Längsträger einer anderen Art austauschbar sind.

Die zuvor genannte Aufgabe ist darüber hinaus gemäß Anspruch 15 auch durch ein Chassis eines Nutzfahrzeugs, insbesondere Sattelaufliegers, Anhängers oder Lastkraftwagens, mit einer Chassisstruktur nach einem der Ansprüche 1 bis 13 gelöst.

Durch die lösbare Verbindung der Seitenteile mit den Endabschnitten des Mittelteils wird ein mehrteiliger Aufbau des Kopfrahmens geschaffen, der ein hohes Maß an Flexibilität hinsichtlich der Ausgestaltung des Kopfrahmens bereitstellt. So wird es möglich, unterschiedliche Nutzfahrzeuge mit unterschiedlichen und speziell an die einzelnen Nutzfahrzeuge angepasste Kopfrahmen zu versehen, ohne in jedem Fall gänzlich individuelle Kopfrahmen entwickeln und fertigen zu müssen. Vielmehr ist es möglich, auf Gleichteile zurückzugreifen und diese zur weiteren Vereinfachung der Fertigung über lösbare Verbindung miteinander zu verbinden.

Auf diese Weise lassen sich sehr viele unterschiedliche und sehr verschiedene Kopfrahmen aus einer beschränken Anzahl unterschiedlicher Mittelteile sowie einer beschränkten Anzahl an Seitenteilen zusammenstellen. Die lösbare Verbindung der Seitenteile mit den Endabschnitten der Mittelteile führt zwar zu einem konstruktiven Zusatzaufwand, insbesondere auch deshalb weil die lösbaren Verbindungen derart ausgestaltet sein müssen, dass jeweils unterschiedliche Arten von Seitenteilen mit unterschiedlichen Arten von Mittelteilen verbunden werden können. Dieser zusätzliche Konstruktions- und Fertigungsaufwand wird jedoch dann überkompensiert, wenn viele unterschiedliche Kopfrahmen bereitgestellt werden sollen. Des Weiteren kann der Konstruktions- und Fertigungsaufwand gesenkt werden, wenn die Seitenteile mit dem Mittelteil über Verschraubungen verbunden werden.

Vorliegend werden unterschiedliche Bauteile, wie etwa Mittelteilen, Seitenteilen, Kopfrahmen, Längsträgern, Chassis, vorzugsweise im Sinne unterschiedlicher Arten der entsprechenden Bauteile verstanden. Im Gegensatz dazu können mehrere Bauteile auch gleichartig aufgebaut sein. Obwohl diese gleichartigen Bauteile regelmäßig untereinander unterschieden werden können, handelt es sich dabei nach dem vorliegenden Verständnis nicht um unterschiedliche Arten von Bauteilen und auch nicht zwingend um unterschiedliche Bauteile. Des besseren Verständnisses halber und zur Vermeidung von unnötigen Wiederholungen, wird vorliegend nicht immer im Einzelnen drauf eingegangen, wie ähnlich oder unähnlich sich einzelne Bauteile sind. Dies ist für den Fachmann aber anhand des jeweiligen Kontextes jeweils ersichtlich.

Unter Verwendung einer Chassisstruktur der vorgenannten Art kann ein Chassisstruktursystem bereitgestellt werden, was zusätzlich noch wenigstens ein weiteres Mittelteil, wenigstens ein weiteres Seitenteil und/oder wenigstens einen weiteren Längsträger aufweist, wobei jedoch das wenigstens eine weitere Mittelteil, das wenigstens eine weitere Seitenteil und/oder der wenigstens eine weitere Längsträger einer anderen Art angehört, als das Mittelteil, die Seitenteile bzw. die Längsträger der Chassisstruktur. Zudem zeichnet sich das Chassisstruktursystem dadurch aus, dass das Mittelteil, die Seitenteile und/oder die Längsträger der Chassisstruktur durch das wenigstens eine weitere Mittelteil, das wenigstens eine weitere Seitenteil und/oder der wenigstens eine weitere Längsträger ersetzt werden kann/können, um auf diese Weise eine andere Art einer Chassisstruktur zu bilden. Mit anderen Worten wird durch das Chassisstruktursystem eine Art Baukastensystem bereitgestellt, das von wenigstens einem der genannten Bauteile wenigstens zwei Arten umfasst, die jeweils wahlweise mit weiteren Bauteilen zu dann unterschiedlichen Arten Chassisstrukturen zusammengesetzt werden können. Durch die lösbare Verbindung zwischen dem oder den entsprechenden Mittelteilen und den entsprechenden Seitenteilen wird zudem erreicht, dass die Wahlmöglichkeit nicht nur bei der ursprünglichen Fertigung gegeben ist, sondern auch später noch erhalten bleibt, etwa um Chassisstrukturen, bzw. die Art der Chassistruktur durch den Austausch einzelnen Bauteile zu variieren. Bei dieser Variation, sei es bei der ursprünglichen Herstellung der Chassisstruktur oder bei einer späteren Modifikation der Chassisstruktur, müssen dann nicht alle Bauteile der Chassisstruktur ersetzt bzw. ausgetauscht werden, auch wenn dies natürlich denkbar wäre. Besonders bevorzugt ist es dabei nämlich, wenn die Art der Chassisstruktur durch die Variation der Art eines Bauteils oder nur bestimmter Bauteile verändert werden kann, ohne dass dabei die Art aller Bauteile geändert werden muss, da dies die Änderung und den Austausch aller Bauteile erfordern würde.

Vor dem Hintergrund, dass das Chassis mehr Bauteile umfassen kann als Längsträger, Seitenteile und ein Mittelteil, um die jeweils gewünschten Funktionen des Chassis bereitstellen zu können, ist es weiterhin besonders bevorzugt, wenn das Chassis eines Nutzfahrzeugs, insbesondere Sattelaufliegers, Anhängers oder Lastkraftwagens, mit einer Chassisstruktur, wie sie zuvor beschrieben wurde, ausgestattet ist. Dabei kann das Chassis typischerweise noch Querträger und Verbindungsmittel zur Verbindung des Ladebodens, das Fahrwerks und/oder von Anbauteilen an das Chassis umfassen. In diesem Zusammenhang wird der Begriff Chassis vorzugsweise in einer fachüblichen Weise verstanden. Der Fachmann kann dem Begriff Chassis vorliegend also eine klare Bedeutung beimessen, ohne dass es hierzu vorliegend unnötiger und umfangreicher, weiterer Ausführung bedarf.

Bei einer ersten besonders bevorzugten Ausgestaltung der Chassisstruktur ist vorgesehen, dass die Seitenteile jeweils auf einer Außerseite der gegenüberliegenden Längsträger mit dem Mittelteil verbunden sind. Dies erhöht die Stabilität des Kopfrahmens und erlaubt es, höhere Kräfte zuverlässiger abzuleiten. Dabei wird auch die Montage der Seitenteile vereinfacht. Zudem können die Seitenteile so einfach einen Teil des hinteren Abschlusses des Kopfrahmens bilden, mithin so neben dem Mittelteil angeordnet sein, dass sich der Kopfrahmen insgesamt und anders als das Mittelteil selbst über wenigstens im Wesentlichen die gesamte Breite des Nutzfahrzeugs erstrecken kann.

Alternativ oder zusätzlich kann in diesem Zusammenhang vorgesehen sein, dass die Seitenteile und das Mittelteil auf wenigstens einer Linie quer zu den Längsträgern nebeneinander angeordnet sind. So lässt sich die gewünschte endgültige Breite des Kopfrahmens zweckmäßig durch die Seitenteile und das Mittelteil bereitstellen. Dabei ist es der Einfachheit halber weiter bevorzugt, wenn sich die entsprechende Linie entlang der Rückseite des Mittelteils erstreckt. Zudem sind die Seitenteile und das Mittelteil vorzugsweise nicht nur miteinander verbunden, sondern auch direkt miteinander verbunden, so dass die Seitenteile an dem Mittelteil anliegen. Dies erhöht die Stabilität und die Steifigkeit des Kopfrahmens und kann dessen Fertigung vereinfachen. In weiter bevorzugter Ausgestaltung erstreckt sich die vorgenannte Linie durch Verbindungsflächen zwischen den Seitenteilen und dem Mittelteil.

Um die Stabilität und Haltbarkeit des Kopfrahmens zu erhöhen, kann es sich anbieten, wenn sich das Mittelteil ununterbrochen von einem Endabschnitt zum gegenüberliegenden Endabschnitt des Mittelteils erstreckt. Das Mittelteil ist dann also durchgehend ausgebildet. Dies lässt bei Verringerung der Herstellungskosten beispielsweise dadurch erreichen, dass das Mittelteil einstückig ausgebildet ist. Es werden also nicht zunächst verschiedene Abschnitte des Mittelteils gefertigt, die anschließend miteinander verbunden werden.

Zur Ableitung von Kräften vom Kopfrahmen an die Längsträger bietet es sich an, wenn sich die Seitenteile wenigstens im Wesentlichen schräg zu den Längsträgern jeweils von dem zugehörigen Endabschnitt zu dem zugehörigen Längsträger erstrecken. So wird beispielsweise ein Knicken der Seitenteile und/oder ein Abreißen der Seitenteile von den Längsträgern verhindert. Außerdem wird der Kopfrahmen durch die Ausrichtung der Seitenteile bedarfsweise ausgesteift.

Hinsichtlich der Fertigung ist es einfach und zweckmäßig, wenn die Seitenteile jeweils auf einer Außerseite der gegenüberliegenden Längsträger angeordnet sind. Hinsichtlich des Konstruktions- und Fertigungsaufwands sind die Seitenteile zusätzlich oder alternativ lösbar mit den Längsträgern verbunden, und zwar insbesondere verschraubt. Alternativ oder zusätzlich können die Seitenteile auch mit einer den Ladeboden bereitstellenden Bodenstruktur verbunden sein. Dies ist insbesondere zweckmäßig, wenn von den Seitenteilen höhere Kräfte in die Bodenstruktur abgeleitet werden können, ohne dass es dabei zu nachhaltigen Beschädigungen der Bodenstruktur kommt.

Dabei können die Seitenteile jeweils über wenigstens eine separate Seitenteilkonsole mit einem Längsträger lösbar verbunden, insbesondere verschraubt, sein. Dies vereinfacht die Anbindung der Seitenteile an den Längsträger und kann der besseren Ableitung von Kräften an die Längsträger dienen. Dabei ist es für die Fertigungsflexibilität und den Fertigungsaufwand weiter bevorzugt, wenn die Seitenteilkonsolen mit den Längsträgern und mit den Seitenteilen lösbar verbunden, insbesondere verschraubt, sind.

Wenn das Mittelteil mit wenigstens einem Längsträger lösbar verbunden, vorzugsweise verschraubt, ist, wird ebenfalls die Fertigungsflexibilität erhöht und der Fertigungsaufwand gesenkt. Dabei ist es sowohl zur mechanischen Anbindung als auch zur Kraftableitung an die Längsträger besonders zweckmäßig, wenn das Mittelteil auf der Innenseite des wenigstens einen Längsträgers mit dem Längsträger lösbar verbunden, vorzugsweise verschraubt, ist. Stabiler und langlebiger ist es zudem, wenn das Mittelteil mit den zwei Längsträgern lösbar verbunden, vorzugsweise verschraubt, ist. Aus den zuvor bereits genannten Gründen bietet sich dieses ebenso auf der Innenseite der Längsträger an.

Zur Vereinfachung der Anbindung des Mittelteils an die Längsträger und zur besseren Ableitung von Kräften an die Längsträger kann es zweckmäßig sein, wenn das Mittelteil über wenigstens eine separate Mittelteilkonsole mit wenigstens einem Längsträger verbunden ist. Dabei kann der Stabilität und Langlebigkeit halber das Mittelteil über jeweils eine separate Mittelteilkonsole mit beiden Längsträgern verbunden sein. Die Verbindungen zwischen den Mittelteilkonsolen mit den Längsträgern und/oder die Verbindung der Seitenkonsolen mit den Seitenteilen kann ebenso wie die Verbindung der Mittelkonsolen und/oder der Seitenkonsolen lösbar verbunden, insbesondere durch Verschraubungen erfolgen.

Damit das Mittelteil hinreichend steif, stabil und langlebig ist, kann das Mittelteil eine Rahmenstruktur aufweisen, die wenigstens zwei Strukturlängsträger und wenigstens zwei Strukturquerträger umfasst. Steifer, stabiler und langlebiger kann das Mittelteil sein, wenn es wenigstens vier, insbesondere wenigstens sechs, Strukturquerträger umfasst. Gleiches gilt alternativ oder zusätzlich, wenn die entsprechende Anzahl an Strukturquerträgern die wenigstens zwei Längsträger verbinden.

Zum Zwecke einer verbesserten Kraftableitung kann es zudem zweckmäßig sein, wenn die Seitenteile und/oder das Mittelteil jeweils wenigstens ein Rammpufferelement tragen. Hierzu können die Seitenteile und/oder das Mittelteil zudem Aufnahmen aufweisen, in den die Rammpufferelemente wenigstens teilweise aufgenommen sind. Dies dient der Stabilität des Kopfrahmens und einer zuverlässigen Kraftableitung an die Längsträger. Die Rammpufferelemente können beispielsweise elastische Rammpuffer aufweisen, um Beschädigungen des Kopfrahmens zu vermeiden. Auch können die Rammpufferelemente Rollen aufweisen, um beim Be- oder Entladen an einem Hindernis zweckmäßig in vertikaler Richtung abgleiten zu können. Alternativ oder zusätzlich zu den Rollen können auch Verschleißteile vorgesehen sein, die an dem Hindernis vertikal abgleiten und, sobald sie verschlissen sind, ausgetauscht werden können.

Wenn die Seitenteile und/oder das Mittelteil einerseits und die Rammpufferelemente andererseits lösbar miteinander verbunden, insbesondere verschraubt, sind, können die Rammpufferelemente, die Seitenteile und/oder das Mittelteil unter Weiterverwendung der Rammpufferelemente leicht und zügig getauscht werden. Der Austausch erfolgt dann je nachdem, ob die Rammpufferelemente, die Seitenteile und/oder das Mittelteil verschlissen sind.

Die Rammpufferelemente weisen aus funktionalen Gründen und aus Kostenerwägungen vorzugsweise elastische Kunststoffpuffer und/oder federbelastete Rollen aus, die jeweils zur Anlage an eine Laderampe ausgebildet sind. Damit die Rollen auch zur Dämpfung einer geringfügigen rückseitigen Kollision dienen können, ist es zweckmäßig, wenn die Rollen federbelastet ausgebildet werden. Das entsprechende Rammpufferelement kann mithin ein entsprechendes Federelement zur Beaufschlagung einer Rolle oder mehrerer Rollen mit einer entsprechenden Rückstellkraft aufweisen.

Nachfolgend wird die Erfindung anhand einer lediglich ein Ausführungsbeispiel darstellenden Zeichnung näher erläutert.
- Fig. 1: ein Nutzfahrzeug mit einem Chassis umfassend die erfindungsgemäße Chassisstruktur in einer perspektivischen Ansicht,
- Fig. 2A-B: die Chassisstruktur aus Fig. 1 in einer Draufsicht und einer perspektivischen Ansicht,
- Fig. 3: die Chassisstruktur aus Fig. 1 in einer Explosionsdarstellung,
- Fig. 4: ein Mittelteil eines Kopfrahmens der Chassisstruktur aus Fig. 1 in einer perspektivischen Ansicht von unten,
- Fig. 5: ein Seitenteil des Kopfrahmens der Chassisstruktur aus Fig. 1 in einer perspektivischen Ansicht von unten und
- Fig. 6: eine alternative Chassisstruktur mit Rollrammpuffern in einer perspektivischen Ansicht.

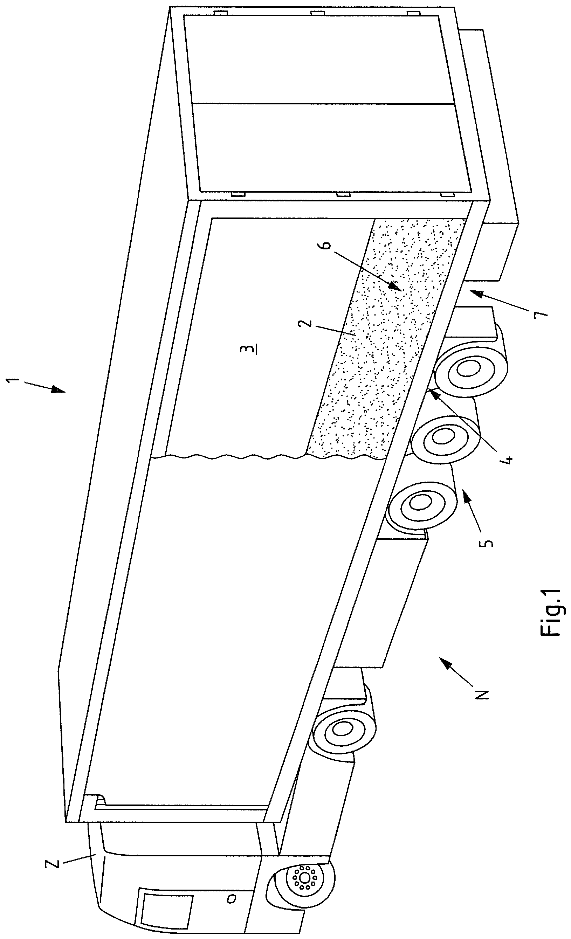

In der Fig. 1 ist ein Nutzfahrzeug N in Form eines von einer Zugmaschine Z gezogenen Sattelaufliegers in einer perspektivischen Ansicht dargestellt. Das dargestellte und insoweit bevorzugte Nutzfahrzeug N weist einen Nutzfahrzeugaufbau 1 in Form eines Planenaufbaus auf, wobei jedoch ebenso gut ein Kofferaufbau vorgesehen sein könnte. Der Nutzfahrzeugaufbau 1 weist einen Ladeboden 2 auf, auf dem Ladung abgestellt werden und umfasst den Laderaum 3 zur Aufnahme der Ladung. Der Ladeboden 2 wird dabei von einem Chassis 4 getragen, das den Nutzfahrzeugaufbau 1 mit dem Fahrgestell 5 verbindet. Bei dem dargestellten und insoweit bevorzugten Nutzfahrzeug N wird der Ladeboden 2 von einer Bodenstruktur 6 bereitgestellt die eine Sandwichstruktur aufweist, die den Ladeboden 2 und eine untere Decklage 7 umfasst. Zwischen dem Ladeboden 2 und der unteren Decklage 7 sind Querträger vorgesehen welche die auf den Ladeboden 2 einwirkenden Kräfte aufnehmen und an das darunter befindliche und mit der Bodenstruktur 6 verbundene Chassis 4 weiterleiten. Das Chassis 4 bzw. die Chassisstruktur 8 ist lösbar mit der Bodenstruktur 6 erbunden, insbesondere verschraubt.

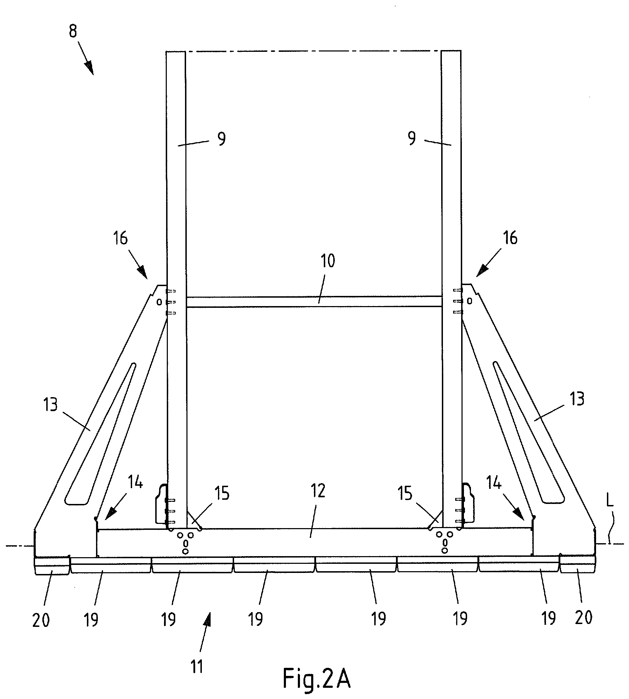

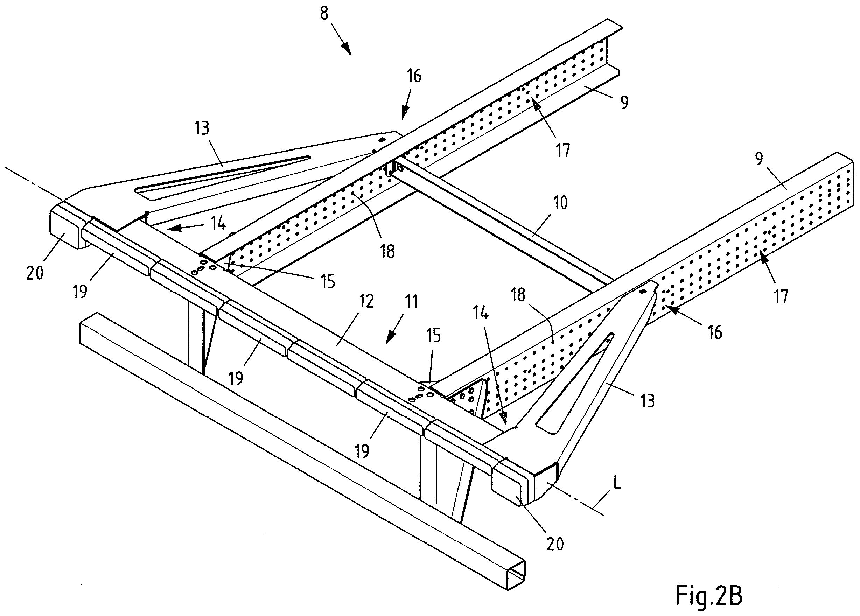

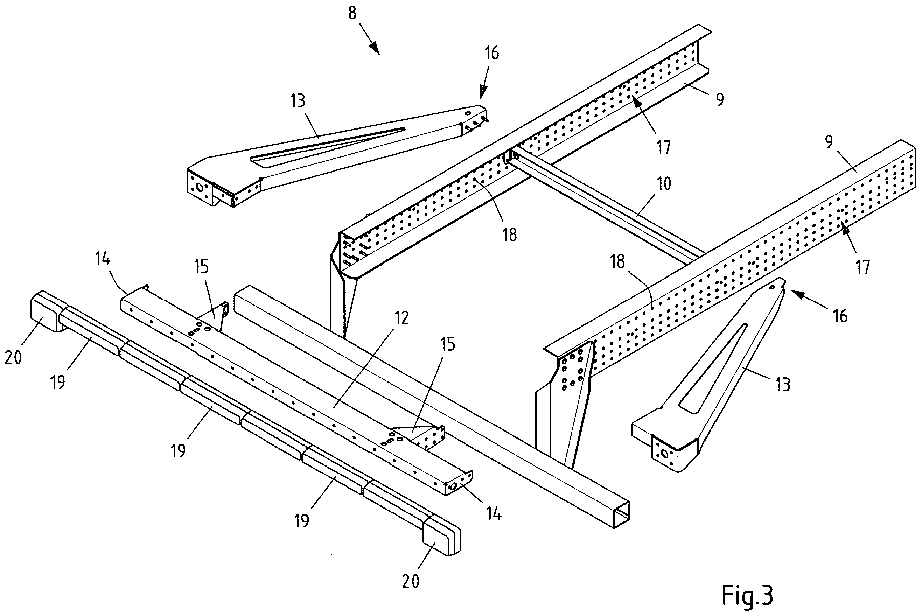

In den Fig. 2A-B ist eine Chassisstruktur 8 des Chassis 4 in einer Draufsicht und einer perspektivischen Ansicht dargestellt. Des Weiteren ist die Chassisstruktur 8 in der Fig. 3 in einer wenigstens teilweisen Explosionsdarstellung dargestellt, in der die genaue Ausgestaltung einzelner Bauteile der Chassisstruktur 8 prinzipiell besser erkennbar sind. Die Chassisstruktur 8 weist dabei einen sogenannten Leiterrahmen auf, der zwei Längsträger 9 umfasst, die parallel und beabstandet zueinander angeordnet sind. Die beiden Längsträger 9 werden dabei durch eine Reihe von Querträgern 10 verbunden, die sich quer zu den Längsträgern 9 und zwischen diesen erstrecken. Die Querträger 10 untereinander sind ebenfalls parallel zueinander und voneinander beabstandet angeordnet. Ferner umfasst die Chassisstruktur 8 einen am hinteren Ende der Längsträger 9 vorgesehenen sogenannten Kopfrahmen 11, der wiederum im Wesentlichen ein Mittelteil 12 und zwei Seitenteile 13 umfasst. Das Mittelteil 12 ist dabei mit gegenüberliegenden Endabschnitten 14 lösbar mit den beiden Seitenteilen 13 verbunden wobei die Seitenteile 13 jeweils abschnittsweise neben dem Mittelteil 12 angeordnet sind. Bei der dargestellten und insoweit bevorzugten Chassisstruktur 8 ist das Mittelteil 12 mit seinen Endabschnitten 14 mit den Seitenteilen 13 verschraubt. Zudem ist das Mittelteil 12 mit beiden Längsträgern 9 lösbar verbunden, besser gesagt verschraubt. Hierzu ist bei der dargestellten und insoweit bevorzugten Chassisstruktur 8 jedem Längsträger 9 eine Mittelteilkonsole 15 zugeordnet, welche die Verbindung des Mittelteils 12 mit dem Längsträger 9 übernimmt. Bei der dargestellten und insoweit bevorzugten Chassisstruktur 8 sind die Mittelkonsolen 15 an der jeweiligen Innenseite der Längsträger 9 vorgesehen und dort verschraubt.

Die Seitenteile 13 sind teilweise in der Verlängerung des Mittelteils 12 zur Seite angeordnet, so dass sich der Kopfrahmen 11 wenigstens im Wesentlichen über die gesamte Breite des Nutzfahrzeugs N erstreckt. Der Mittelteil 12 des Kopfrahmens 11 erstreckt sich dabei lediglich über einen Teil der Breite des Nutzfahrzeugs N. Anders ausgedrückt liegen das Mittelteil 12 und die Seitenteile 13 abschnittsweise auf einer gemeinsamen Linie L, die sich quer zu den Längsträgern 9 erstreckt, nebeneinander und zwar durchgängig. Die entsprechende Linie L verläuft also vorzugsweise durch die direkten Verbindungsstellen zwischen dem Mittelteil 12 und den Seitenteilen 13.

Während sich das Mittelteil 12 wenigstens im Wesentlichen quer zu dem Nutzfahrzeug N und quer zu den Längsträgern 9 erstreckt, verlaufen die Seitenteile 13 überwiegend schräg zu den Längsträgern 9 bzw. dem Nutzfahrzeug N. Hinzu kommt, dass sich der Mittelteil 12 wenigstens hauptsächlich hinter dem rückseitigen Ende der Längsträger 9 erstreckt. Die Seitenteile 13 erstrecken sich mithin von den Endabschnitten 14 des Mittelteils 12 schräg zu den Außenseiten der jeweils zugeordneten Längsträger 9. Mit den von dem Mittelteil 12 abgewandten Enden 16 sind die Seitenteile 13 zudem lösbar mit den Außenseiten der jeweiligen Längsträger 9 verbunden, und zwar vorliegend verschraubt. Bei der dargestellten und insoweit bevorzugten Chassisstruktur 8 sind die Seitenteile 13 nicht über separate Seitenteilkonsolen mit den Längsträgern 9 verbunden. Dies wäre jedoch möglich. Es wäre auch möglich, dass die Seitenteile 13 alternativ oder zusätzlich zu den Längsträgern 9 von unten mit der Bodenstruktur 6 verbunden, insbesondere verschraubt, sind.

Die Längsträger 9 der Chassisstruktur 8 weisen ein, vorzugsweise regelmäßiges, Lochbild 17 auf. Das Lochbild 17 umfasst dabei deutlich mehr Löcher 18, als zur Montage an einem bestimmten Längsträger 9 erforderlich wären. Das Lochbild 17 hält also beispielsweise für die Montage der Seitenteile 13 und/oder des Mittelteils 12 jeweils unterschiedliche Montagepunkte bereit, so dass auch sehr unterschiedliche Mittelteile 12 und/oder Seitenteile 13 mit den Längsträgern 9 verbunden werden können. In diesem Fall können unterschiedliche Mittelteile 12 und/oder Seitenteile 13 bedarfsweise an unterschiedlichen Stellen, mithin über unterschiedliche Löcher 18 in den Längsträgern 9 an den Längsträgern 9 montiert werden. Beispielsweise können dann die Seitenteile 13 wahlweise länger oder kürzer gewählt werden.

Die Seitenteile 13 und das Mitteteil 12 tragen rückseitig Rammpufferelemente 19,20, um eine Kollision mit einer Laderampe oder dergleichen zu dämpfen. Die Rammpufferelemente 19,20 können daher elastische Kunststoffpuffer aufweisen. Dabei können die Rammpufferelement 19 einfach flächig an der Rückseite des Kopfrahmens 11 montiert, insbesondere angeschraubt, sein. Insbesondere die Seitenteile 13 können jeweils wenigstens eine Montagefläche 21 zur Montage eines korrespondierenden Rammpufferelements 20 umfassen.

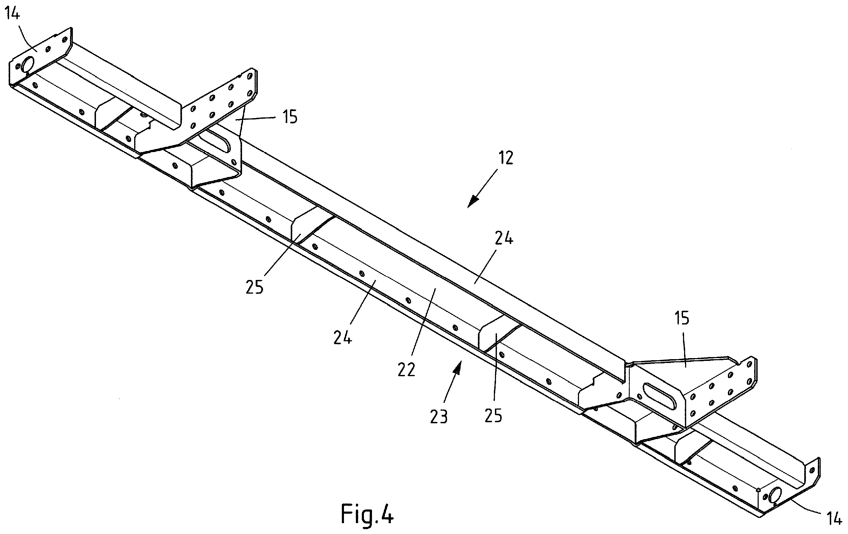

Das Mittelteil 12 ist in der Fig. 4 in einer perspektivischen Ansicht von unten dargestellt. Das Mittelteil 12 ist aus Blech gefertigt und weist unter einer Decklage 22 eine Rahmenstruktur 23 auf. Diese Rahmenstruktur 23 umfasst vorliegend zwei Strukturlängsträger 24, die sich in der Längsrichtung des Mittelteils 12 erstrecken. Beide Strukturlängsträger 24 sind dabei vorzugsweise wenigstens im Wesentlichen parallel zueinander ausgerichtet. Zwischen den voneinander beabstandeten Strukturlängsträgern 24 sind mehrere Strukturquerträger 25 vorgesehen, die in Längsrichtung des Mittelteils 12 mehr oder weniger regelmäßig verteilt sind. Dabei werden die Strukturlängsträger 24 untereinander vorzugsweise über die Strukturquerträger 25 miteinander verbunden.

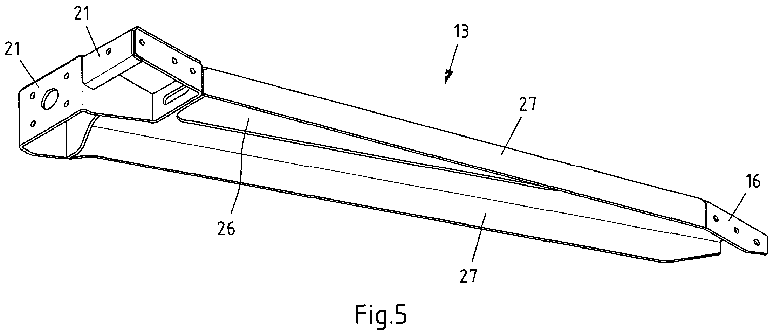

In der Fig. 5 ist ein Seitenteil 13 in einer perspektivischen Ansicht von unten dargestellt. Zur Einsparung von Material und ohne die Steifigkeit übermäßig zu schwächen, ist in dem Seitenteil eine zentrale Aussparung 26 in Form einer Öffnung vorgesehen. Die Ränder 27 des Seitenteils 13 sind zur Aussteifung abgekantet. Ferner weist das Seitenteil 13 am hinteren Ende Montageflächen 21 zur Montage von Rammpufferelementen 19,20 auf.

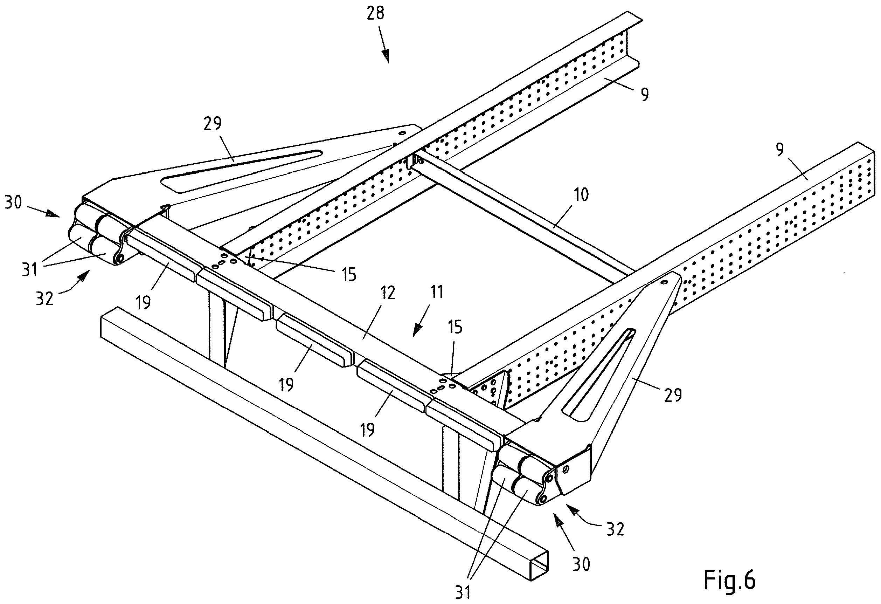

In der Fig. 6 ist eine alternative Chassisstruktur 28 dargestellt, die der zuvor beschriebenen Chassisstruktur 8 stark ähnelt. Ein wesentlicher Unterschied liegt jedoch darin, dass die Seitenteile 29 anstelle von elastischen Kunststoffpuffern Rammpufferelemente 30 in Form von sogenannten Rollrammpuffern tragen. Diese weisen Rollen 31 mit horizontalen Drehachsen auf. Wenn das Nutzfahrzeug N an einer Laderampe einfedert oder ausfedert, rollen die Rollen 31 an der Laderampe nach oben oder unten ab. Wenn das Nutzfahrzeug N rückwärts gegen die Laderampe oder ein anderes ähnliches Hindernis fährt, können die Rollen 31 gegen die Rückstellkraft eines Federmittels 32 in Richtung der Seitenteile 29 eingedrückt werden, um den entsprechenden Stoß zu dämpfen.

### Bezugszeichenliste

- 1: Nutzfahrzeugaufbau
- 2: Ladeboden
- 3: Laderaum
- 4: Chassis
- 5: Fahrgestell
- 6: Bodenstruktur
- 7: Decklage
- 8: Chassisstruktur
- 9: Längsträger
- 10: Querträger
- 11: Kopfrahmen
- 12: Mittelteil
- 13: Seitenteil
- 14: Endabschnitt
- 15: Mittelkonsolen
- 16: Ende
- 17: Lochbild
- 18: Loch
- 19,20: Rammpufferelement
- 21: Montagefläche
- 22: Decklage
- 23: Rahmenstruktur
- 24: Strukturlängsträger
- 25: Strukturquerträger
- 26: Aussparung
- 27: Rand
- 28: Chassisstruktur
- 29: Seitenteil
- 30: Rammpufferelement
- 31: Rollen
- 32: Federmittel
- L: Linie
- N: Nutzfahrzeug
- Z: Zugmaschine

## Patentansprüche

1. Chassisstruktur (8,28) eines Nutzfahrzeugs (N), insbesondere Sattelaufliegers, Anhängers oder Lastkraftwagens, mit einem Ladeboden (2) zum Abstellen von zu transportierender Ladung, mit zwei Längsträgern (9) zum Abstützen des Ladebodens (2) und mit einem dem hinteren Ende der Längsträger (9) zugeordneten Kopfrahmen (11), wobei der Kopfrahmen (11) ein sich wenigstens abschnittsweise hinter sowie quer zu den Längsträgern (9) erstreckendes Mittelteil (12) und zwei jeweils wenigstens abschnittsweise auf den Außerseiten der gegenüberliegenden Längsträgern (9) angeordnete sowie jeweils mit einem Endabschnitt (14) des Mittelteils (12) verbundene Seitenteile (13,29) aufweist,
**dadurch gekennzeichnet, dass**
die Seitenteile (13,29) jeweils lösbar mit einem Endabschnitt (14) des Mittelteils (12) verbunden, insbesondere verschraubt, sind.

2. Chassisstruktur nach Anspruch 1,
**dadurch gekennzeichnet, dass**
die Seitenteile (13) jeweils auf einer Außerseite der gegenüberliegenden Längsträger (9) mit dem Mittelteil (12) verbunden sind.

3. Chassisstruktur nach Anspruch 1 oder 2,
**dadurch gekennzeichnet, dass**
die Seitenteile (13,29) und das Mittelteil (12) auf wenigstens einer Linie (L) quer zu den Längsträgern (9) nebeneinander, vorzugsweise aneinander anliegend, angeordnet sind.

4. Chassisstruktur nach einem der Ansprüche 1 bis 3,
**dadurch gekennzeichnet, dass**
sich das Mittelteil (12) ununterbrochen, vorzugsweise einstückig, von einem Endabschnitt (14) zum gegenüberliegenden Endabschnitt (14) des Mittelteils (12) erstreckt.

5. Chassisstruktur nach einem der Ansprüche 1 bis 4,
**dadurch gekennzeichnet, dass**
sich die Seitenteile (13,29) wenigstens im Wesentlichen schräg zu den Längsträgern (9) jeweils von dem zugehörigen Endabschnitt (14) zu dem zugehörigen Längsträger (9) erstrecken.

6. Chassisstruktur nach einem der Ansprüche 1 bis 5,
**dadurch gekennzeichnet, dass**
die Seitenteile (13,29) jeweils auf einer Außerseite der gegenüberliegenden Längsträger (9) mit den Längsträgern (9) lösbar verbunden, insbesondere verschraubt, sind.

7. Chassisstruktur nach Anspruch 6,
**dadurch gekennzeichnet, dass**
die Seitenteile (13,29) jeweils über wenigstens eine separate Seitenteilkonsole mit einem Längsträger (9) lösbar verbunden, insbesondere verschraubt, sind und dass, vorzugsweise die Seitenteilkonsolen mit den Längsträgern (9) und mit den Seitenteilen (13,29) lösbar verbunden, insbesondere verschraubt, sind.

8. Chassisstruktur nach einem der Ansprüche 1 bis 7,
**dadurch gekennzeichnet, dass**
das Mittelteil (12) mit wenigstens einem Längsträger (9), insbesondere auf der Innenseite des Längsträgers (9), lösbar verbunden, vorzugsweise verschraubt, ist und dass, vorzugsweise, das Mittelteil (12) mit den zwei Längsträgern (9), insbesondere auf der Innenseite der Längsträger (9), lösbar verbunden, vorzugsweise verschraubt, ist.

9. Chassisstruktur nach Anspruch 8,
**dadurch gekennzeichnet, dass**
das Mittelteil (12) über wenigstens eine separate Mittelteilkonsole (15) mit wenigstens einem Längsträger (9), insbesondere über jeweils eine separate Mittelteilkonsole (15) mit beiden Längsträgern (9), verbunden ist und dass, vorzugsweise die Mittelteilkonsolen (15) mit den Längsträgern (9) und/oder die Seitenteilkonsolen mit den Seitenteilen (13,29) lösbar verbunden, insbesondere verschraubt, sind.

10. Chassisstruktur nach einem der Ansprüche 1 bis 9,
**dadurch gekennzeichnet, dass**
das Mittelteil (12) eine Rahmenstruktur (23) umfassend wenigstens zwei Strukturlängsträger (24) und wenigstens zwei, vorzugsweise wenigstens vier, insbesondere wenigstens sechs, die wenigstens zwei Strukturlängsträger (24) verbindende Strukturquerträger (25) aufweist.

11. Chassisstruktur nach einem der Ansprüche 1 bis 10,
**dadurch gekennzeichnet, dass**
die Seitenteile (13,29) jeweils wenigstens ein Rammpufferelement (19,20,30) tragen und dass, vorzugsweise, die Rammpufferelemente (19,20,30) wenigstens teilweise in Aufnahmen oder an einer Montagefläche (21) der Seitenteile (13,29) aufgenommen sind.

12. Chassisstruktur nach Anspruch 11,
**dadurch gekennzeichnet, dass**
die Seitenteile (13,29) und die Rammpufferelemente (19,20,30) lösbar verbunden, insbesondere verschraubt, sind.

13. Chassisstruktur nach Anspruch 11 oder 12,
**dadurch gekennzeichnet, dass**
die Rammpufferelemente (19,20,30) elastische Kunststoffpuffer und/oder, insbesondere federbelastete, Rollen jeweils zur Anlage an eine Laderampe aufweisen.

14. Chassisstruktursystem mit wenigstens einer Chassisstruktur (8,28) nach einem der Ansprüche 1 bis 13, mit wenigstens zwei unterschiedlichen Arten von Mittelteilen (12) und/oder mit wenigstens zwei unterschiedlichen Arten von Seitenteilen (13,29) und/oder mit jeweils zwei unterschiedlichen Arten von Längsträgern (9), wobei das Mittelteil (12), die Seitenteile (13,29) und/oder die Längsträger (9) der Chassisstruktur (8,28) zur Bildung unterschiedlicher Arten von Chassisstrukturen (8,28) jeweils gegen ein Mittelteil (12), Seitenteile (13,29) und/oder Längsträger (9) einer anderen Art austauschbar sind.

15. Chassis (4) eines Nutzfahrzeugs (N), insbesondere Sattelaufliegers, Anhängers oder Lastkraftwagens, mit einer Chassisstruktur (8,28) nach einem der Ansprüche 1 bis 13.

## Claims

1. Chassis structure (8, 28) of a commercial vehicle (N), in particular a semitrailer, trailer or lorry, with a loading floor (2) for depositing a load to be transported, with two longitudinal supports (9) for supporting the load floor (2) and with a head frame (11) assigned to the rear end of the longitudinal supports (9), wherein the head frame (11) has a middle part (12) extending at least in sections behind and transverse to the longitudinal supports (9) and two side parts (13, 29) in each case arranged at least in sections on the outer sides of the opposing longitudinal supports (9) and in each case connected to an end section (14) of the middle part (12), **characterised in that** the side parts (13, 29) are each removably connected, in particular screwed, to an end section (14) of the middle part (12).

2. Chassis structure according to claim 1, **characterised in that** the side parts (13) are each connected on an outer side of the opposing longitudinal supports (9) to the middle part (12).

3. Chassis structure according to claim 1 or 2, **characterised in that** the side parts (13, 29) and the middle part (12) are arranged next to one another, preferably abutting one another, on at least one line (L) transverse to the longitudinal supports (9).

4. Chassis structure according to any one of claims 1 to 3, **characterised in that** the middle part (12) extends uninterrupted, preferably in one piece, from one end section (14) to the opposing end section (14) of the middle part (12).

5. Chassis structure according to any one of claims 1 to 4, **characterised in that** the side parts (13, 29) extend at least substantially obliquely to the longitudinal supports (9) in each case from the associated end section (14) to the associated longitudinal support (9).

6. Chassis structure according to any one of claims 1 to 5, **characterised in that** the side parts (13, 29) are each removably connected, in particular screwed, on an outer side of the opposing longitudinal supports (9) to the longitudinal supports (9).

7. Chassis structure according to claim 6, **characterised in that** the side parts (13, 29) are each removably connected, in particular screwed, via at least one separate side part console to a longitudinal support (9) and preferably **in that** the side part consoles are removably connected, in particular screwed, to the longitudinal supports (9) and to the side parts (13, 29).

8. Chassis structure according to any one of claims 1 to 7, **characterised in that** the middle part (12) is removably connected, in particular screwed, to at least one longitudinal support (9), in particular on the inner side of the longitudinal support (9) and preferably **in that** the middle part (12) is removably connected, preferably screwed, to the two longitudinal supports (9), in particular on the inner side of the longitudinal supports (9).

9. Chassis structure according to claim 8, **characterised in that** the middle part (12) is connected via at least one separate middle part console (15) to at least one longitudinal support (9), in particular via in each case a separate middle part console (15) to both longitudinal supports (9), and preferably **in that** the middle part consoles (15) are removably connected, in particular screwed, to the longitudinal supports (9) and/or the side part consoles to the side parts (13, 29).

10. Chassis structure according to any one of claims 1 to 9, **characterised in that** the middle part (12) has a frame structure (23) comprising at least two structure longitudinal supports (24) and at least two, preferably at least four, in particular at least six, structure transverse supports (25) connecting the at least two structure longitudinal supports (24).

11. Chassis structure according to any one of claims 1 to 10, **characterised in that** the side parts (13, 29) each bear at least one ramp buffer element (19, 20, 30) and **in that** the ramp buffer elements (19, 20, 30) are preferably received at least partially in receiving portions or on an assembly surface (21) of the side parts (13, 29).

12. Chassis structure according to claim 11, **characterised in that** the side parts (13, 29) and the ramp buffer elements (19, 20, 30) are removably connected, in particular screwed.

13. Chassis structure according to claim 11 or 12, **characterised in that** the ramp buffer elements (19, 20, 30) have elastic plastic buffers and/or, in particular spring-loaded, rollers, each for abutting on a load ramp.

14. Chassis structure system with at least one chassis structure (8, 28) according to any one of claims 1 to 13, with at least two different types of middle parts (12) and/or with at least two different types of side parts (13, 29) and/or with in each case two different types of longitudinal supports (9), wherein the middle part (12), the side parts (13, 29) and/or the longitudinal supports (9) of the chassis structure (8, 28) are interchangeable in each case with a middle part (12), side parts (13, 29) and/or longitudinal supports (9) of another type to form different types of chassis structures (8, 28).

15. Chassis (4) of a commercial vehicle (N), in particular a semitrailer, trailer or lorry, with a chassis structure (8, 28) according to any one of claims 1 to 13.

## Revendications

1. Structure de châssis (8, 28) d'un véhicule utilitaire (N), notamment d'une semi-remorque, d'une remorque ou d'un camion, pourvu d'un plancher de chargement (2) pour déposer le chargement à transporter, avec deux supports longitudinaux (9) pour soutenir le plancher de chargement (2) et avec un cadre de tête (11) associé à l'extrémité arrière du support longitudinal (9), le cadre de tête (11) présentant une partie centrale (12) s'étendant, au moins par sections, derrière et transversalement par rapport aux supports longitudinaux (9) et deux parties latérales (13, 29), agencées respectivement, au moins par sections, sur les côtés extérieurs des supports longitudinaux (9) opposés, ainsi que reliées respectivement avec une section terminale (14) de la partie centrale (12), **caractérisée en ce que** les parties latérales (13, 29) sont reliées, respectivement de manière amovible, notamment elles sont vissées, à une section terminale (14) de la partie centrale (12).

2. Structure de châssis selon la revendication 1,
**caractérisée en ce que** les parties latérales (13) sont reliées à la partie centrale (12), respectivement sur un côté extérieur des supports longitudinaux (9) opposés.

3. Structure de châssis selon la revendication 1 ou 2,
**caractérisée en ce que** les parties latérales (13, 29) et la partie centrale (12) sont agencées côte à côte, de préférence elles sont adjacentes, sur au moins une ligne (L), transversalement par rapport aux supports longitudinaux (9).

4. Structure de châssis selon l'une des revendications 1 à 3,
**caractérisée en ce que** la partie centrale (12) s'étend sans interruption, de préférence d'un seul tenant, à partir d'une section terminale (14) vers la section terminale (14) opposée de la partie centrale (12).

5. Structure de châssis selon l'une des revendications 1 à 4,
**caractérisée en ce que** les parties latérales (13, 29) s'étendent, au moins sensiblement de manière inclinée, par rapport aux supports longitudinaux (9), respectivement à partir de la section terminale (14) associée vers le support longitudinal (9) associé.

6. Structure de châssis selon l'une des revendications 1 à 5,
**caractérisée en ce que** les parties latérales (13, 29) sont reliées de manière amovible, notamment elles sont vissées, aux supports longitudinaux (9), respectivement sur un côté extérieur des supports longitudinaux (9) opposés.

7. Structure de châssis selon la revendication 6,
**caractérisée en ce que** les parties latérales (13, 29) sont reliées de manière amovible, notamment elles sont vissées, à un support longitudinal (9), respectivement par l'intermédiaire d'au moins une console séparée de partie latérale et **en ce que**, de préférence, les consoles de partie latérale sont reliées de manière amovible, notamment elles sont vissées, aux supports longitudinaux (9) et aux parties latérales (13, 29).

8. Structure de châssis selon l'une des revendications 1 à 7,
**caractérisée en ce que** la partie centrale (12) est reliée de manière amovible, de préférence elle est vissée, à au moins un support longitudinal (9), notamment sur le côté intérieur du support longitudinal (9), et **en ce que**, de préférence, la partie centrale (12) est reliée de manière amovible, de préférence elle est vissée, aux deux supports longitudinaux (9), notamment sur le côté intérieur des supports longitudinaux (9).

9. Structure de châssis selon la revendication 8,
**caractérisée en ce que** la partie centrale (12) est reliée, par l'intermédiaire au moins d'une console séparée de partie centrale (15), à au moins un support longitudinal (9), elle est reliée, notamment par l'intermédiaire respectivement d'une console séparée de partie centrale (15), aux deux supports longitudinaux (9), et **en ce que**, de préférence, les consoles de partie centrale (15) sont reliées de manière amovible, notamment elles sont vissées, aux supports longitudinaux (9) et/ou les consoles de partie latérale sont reliées de manière amovible, notamment elles sont vissées, aux parties latérales (13, 29).

10. Structure de châssis selon l'une des revendications 1 à 9,
**caractérisée en ce que** la partie centrale (12) présente une structure de cadre (23) comportant au moins deux supports longitudinaux de structure (24) et au moins deux, de préférence au moins quatre, notamment au moins six supports transversaux de structure (25) reliant au moins deux supports longitudinaux de structure (24).

11. Structure de châssis selon l'une des revendications 1 à 10,
**caractérisée en ce que** les parties latérales (13, 29) portent respectivement au moins un élément butoir (19, 20, 30) et **en ce que**, de préférence, les éléments butoirs (19, 20, 30) sont contenus au moins partiellement dans des logements ou sur une surface de montage (21) des parties latérales (13, 29).

12. Structure de châssis selon la revendication 11,
**caractérisée en ce que** les parties latérales (13, 29) et les éléments butoirs (19, 20, 30) sont reliés de manière amovible, notamment ils sont vissés.

13. Structure de châssis selon la revendication 11 ou 12,
**caractérisée en ce que** les éléments butoirs (19, 20, 30) présentent des butées synthétiques élastiques et/ou des rouleaux, notamment contraints par ressort, respectivement destinés à venir en appui sur une rampe de chargement.

14. Système de structure de châssis avec au moins une structure de châssis (8, 28) selon l'une des revendications 1 à 13, avec au moins deux types différents de parties centrales (12) et/ou avec au moins deux types différents de parties latérales (13, 29) et/ou avec respectivement deux types différents de supports longitudinaux (9), la partie centrale (12), les parties latérales (13, 29) et/ou les supports longitudinaux (9) de la structure de châssis (8, 28) pour la formation de types différents de structures de châssis (8, 28) sont interchangeables respectivement par une partie centrale (12), des parties latérales (13, 29) et/ou des supports longitudinaux (9) d'une autre type.

15. Châssis (4) d'un véhicule utilitaire (N), notamment d'une semi-remorque, d'une remorque ou d'un camion, avec une structure de châssis (8, 28) selon l'une des revendications 1 à 13.
